# EUROPÄISCHE PATENTSCHRIFT

(11) **EP 1 311 410 B1**
(45) Veröffentlichungstag und Bekanntmachung des Hinweises auf die Patenterteilung: **11.01.2006**
(21) Anmeldenummer: 01967007.4
(22) Anmeldetag: 16.08.2001
(51) Int. Cl.: B60R 16/02

(54) **VERSTELLEINRICHTUNG UND VERFAHREN ZUR BETÄTIGUNG EINER SITZVERSTELLUNG; EINES FENSTERHEBERS ODER EINES SCHIEBEDACHS EINES KRAFTFAHRZEUGS**
ADJUSTMENT DEVICE AND A METHOD FOR ADJUSTING A SEAT, A WINDOW LIFT, OR A SUN-ROOF OF A MOTOR VEHICLE
DISPOSITIF DE REGLAGE ET PROCEDE POUR ACTIONNER LE REGLAGE D'UN SIEGE, UN LEVE-GLACE OU LE TOIT OUVRANT DANS UN VEHICULE

(30) Priorität: 16.08.2000 DE 10039868
(43) Veröffentlichungstag der Anmeldung: 21.05.2003
(73) Patentinhaber: Brose Fahrzeugteile GmbH & Co. KG, Coburg, 96450 Coburg (DE)
(72) Erfinder: AAB, Volker, 96145 Sesslach-Heiligersdorf (DE)
(74) Vertreter: Ninnemann, Detlef
(86) Internationale Anmeldenummer: PCT/DE2001/003096
(87) Internationale Veröffentlichungsnummer: WO 2002/014111

(56) Entgegenhaltungen:
- WO-A-96/26527
- FR-A- 2 778 980
- US-A- 5 515 399
- US-A- 5 661 651
- US-A- 5 804 888
- US-A- 6 078 252

## Beschreibung

Die Erfindung bezieht sich auf eine Verstelleinrichtung und ein Verfahren zur Betätigung einer Sitzverstellung oder eines Fensterhebers eines Kraftfahrzeugs durch eine fremdkraftbetätigte Verstelleinrichtung, nach den Oberbegriffen der unabhängigen Patentansprüche.

Aus der DE 197 38 684 A1 (Oberbegriff von Anspruch 1 bzw. 23) ist eine Kraftfahrzeugtür mit einer Fensterscheibe und einer fremdkraftbetätigten Verstelleinrichtung zur Verstellung der Fensterscheibe, die aus einem Fensterheber mit einem elektromechanischen Antrieb, aus einer den Antrieb steuernden Steuerelektronik als Steuerungsvorrichtung und aus einem mit der Steuerungsvorrichtung über eine elektrische Leitung verbundenen Schalterblock als Bedienungsvorrichtung besteht. Auf einer Trägerplatte sind alle elektrischen und elektromechanischen Funktionseinheiten befestigt. Zugleich dient die Trägerplatte zur Trennung des Türinnenraums und einen Naßraum und einen Trockenraum.

Der Fahrgast oder der Fahrzeugführer kann durch eine Betätigung der Bedienungsvorrichtung die Position der Fensterscheibe variieren, indem er einen Schalter oder Taster des Schalterblockes der Bedienungsvorrichtung drückt. Ober eine elektrische Leitung wird die Bedienung, also das Drücken des Tasters, an die Steuerungsvorrichtung übermittelt. Die Steuerungsvorrichtung steuert den elektromechanischen Antrieb zu Verstellung der Fensterscheibe über einen bekannten Seil-Fensterheber oder Kreuzarm-Fensterheber.

Gerät das Kraftfahrzeug in eine Unfallsituation, so daß beispielsweise die elektrische Leitung abreißt oder eine elektrische Leitung oder ein elektrischer Kontakt durch in das Kraftfahrzeug eindringendes Wasser kurzgeschlossen wird, kann vom Fahrgast oder dem Fahrzeugführer über die Bedienungsvorrichtung die an sich noch funktionsfähige Steuerungsvorrichtung und der an sich noch funktionsfähige Antrieb durch die Bedienung nicht angesteuert werden. Ein Notausstieg durch das Fenster ist dann ohne Zerstörung des Fensters nicht möglich.

Aus der US-A-6 078 252 ist ein Schaltsystem für ein Fahrzeug bekannt, bei dem durch Betätigen mehrerer mit einem Sender verbundener Schalter Signale erzeugt, durch die verschiedene, mit einem Empfänger verbundene Vorrichtungen im Fahrzeug angesteuert und verstellt werden können. Das Schaltsystem erfordert jedoch eine signalabgebende, aktive Betätigungseinrichtung, die im Störungsfall zu einem Ausfall des Schaltsystems führen kann, so dass keine Verstellung der Verstellvorrichtung möglich ist.

Aus der US-A-5 804 888 ist ein als passive Betätigungseinrichtung dienender Transponder für eine Diebstahlwarneinrichtung für ein Kraftfahrzeug bekannt, wobei der im Kraftfahrzeugschlüssel angeordnete tragbare Transponder eine kodierte Information enthält, die an eine Resonanzschaltung im Schloss des Kraftfahrzeugs zum Abgleich der Zugangsberechtigung übertragen wird.

Der Erfindung liegt daher die Aufgabe zu Grunde, eine Verstelleinrichtung und ein Verfahren zur Verstellung der Verstelleinrichtung anzugeben, die einen Betrieb der Verstelleinrichtung unabhängig von gestörten elektrischen Leitungen zwischen Bedienungsvorrichtung und Steuerungsvorrichtung ermöglichen.

Diese Aufgabe wird durch das Verfahren zur Verstellung mit den Merkmalen des Patentanspruchs 1 und die fremdkraftbetätigte Verstelleinrichtung mit den Merkmalen des Patentanspruchs 23 gelöst. Vorteilhafte Weiterbildungen der Erfindung sind den Unteransprüchen zu entnehmen.

Demgemäß wird ein für die Richtung der Verstellung charakteristisches Ansteuerungssignal zur Ansteuerung der Steuerungsvorrichtung von der Bedienungsvorrichtung an die Steuerungvorrichtung über eine Luftschnittstelle übertragen. Zur Übertragung dienen eine erste Übertragungsvorrichtung der Bedienvorrichtung und eine zweite Übertragungsvorrichtung der Steuerungsvorrichtung. Die erste Übertragungsvorrichtung ist an, vorzugsweise unmittelbar in der Bedienvorrichtung angeordnet. Die Steuerungsvorrichtung weist steuerbare Leistungsschalter zur Bestromung eines Antriebs, vorzugsweise eines Elektromotors auf. Zur Leistungsversorgung des Antriebs kann die Steuerungsvorrichtung zusätzlich mit Energieversorgungsvorrichtungen, wie entsprechend leistungsstarke Kabel oder induktive Leistungskoppelelemente, beispielsweise Transformatorspulen, verbunden sein. Über die Luftschnittstelle werden dagegen die zu einer Bedienung der Bedienungsvorrichtung korrelierenden Signale übertragen. Zur Übertragung über die Luftschnittstelle eignen sich insbesondere Funk, optische oder akustische Übertragungssysteme oder weitere Übertragungssysteme die eine Übertragung über mehrere Zentimeter oder Dezimeter ermöglichen.

Um aus den Ansteuerungssignalen die Richtung der Verstellung zu ermitteln, wird das Ansteuerungssignal entsprechend der Richtung charakterisiert, indem beispielsweise die Steuerungsvorrichtung mindestens zwei verschiedene Ansteuerungssignale für die jeweilige Verstellrichtung unterscheiden kann und die Leistungsschalter entsprechend steuert. Die Charakterisierung erfolgt durch die Bedienungsvorrichtung indem vorzugsweise die Charakteristik der Ansteuerungssignale manuell, mechanisch oder elektrisch verändert wird oder ein Ansteuerungssignal für die eine beziehungsweise andere Verstellrichtung zuschaltbar und abschaltbar ist.

Die Bedienungsvorrichtung wird über die Luftschnittstelle mit Energie versorgt. Dies ist beispielsweise mit einem Empfangsschaltkreis der Bedienungsvorrichtung möglich, der auf einen Sendeschaltkreis abgestimmt ist. Mehrere Sendeschaltkreise können dezentral angeordnet sein, oder ein zentraler Sendeschaltkreis dient zur Energieversorgung einer oder mehrerer Bedienungsvorrichtungen. Alternativ dienen die erste und die zweite Übertragungsvorrichtung neben der Signalübertragung zusätzlich zur Energieversorgung der Bedienungsvorrichtung. Voraussetzung zur Energieversorgung über eine gewisse Femdistanz ist jedoch, daß die Bedienungsvorrichtung nur eine geringe Stromaufnahme benötigt. Die Versorgung der Bedienungsvorrichtung kann von der jeweils zugehörigen Steuerungsvorrichtung aus erfolgen, oder, wenn von der Bedienungsvorrichtung mehrere Steuerungsvorrichtungen angesteuert werden, ist auch eine Versorgung von einer zentralen Funktionseinheit als mit den Steuerungsvorrichtungen zusammenwirkendes Funktionselement über die Luftschnittstelle möglich.

Ist die Zuordnung des Ansteuerungssignals von der Steuerungsvorrichtung erfolgt, steuert die Steuerungsvorrichtung den Antrieb zumindest anhand des über die Luftschnittstelle übertragenen Ansteuerungssignals in der entsprechenden Richtung. In einer Ausgestaltung der Erfindung werden über die Ansteuerungssignale hinaus weitere Signale, beispielsweise Sensorsignale oder weitere Bedienungssignale zur Steuerung ausgewertet.

In einer bevorzugten Ausgestaltung der Erfindung ist die Richtung der Verstellung durch einen Richtungskode im Ansteuerungssignal charakterisiert. Der Richtungskode ist beispielsweise eine für die Richtung charakteristische Bitfolge oder ein einzelnes Bit. Um die Sicherheit der Übertragung zu erhöhen, wird der Richtungskode vorteilhafterweise zusätzlich kodiert oder gespreizt, so daß die jeweilige Steuerungsvorrichtung zumindest die für sie maßgeblichen Daten, beispielsweise durch Faltung mit einem Vergleichskode analog der Kommunikation von mobilen Telekommunikationssystemen, dekodieren kann.

Weitere Mittel zur Charakterisierung sind beispielsweise die Übertragungsfrequenz der übertragenen Ansteuerungssignale. Aber auch alle weiteren Mittel zur Charakterisierung, wie ein Zeitfenster oder der Steuerungsvorrichtung zugeordnete Zeitschlitze, innerhalb dessen die Ansteuerungssignale gesendet werden, können verwendet werden. So wird vorteilhaftweise eine insbesondere zeitgleiche Mehrfachübertragung über die Luftschnittstelle realisiert.

In einer bevorzugten Weiterbildung der Erfindung weist das Ansteuerungssignal eine Zeitinformation über eine Betätigung der Bedienungsvorrichtung auf. Diese Zeitinformation ist vorteilhafterweise in Korrelation mit einer Dauer oder einer Art der Betätigung der Bedienungsvorrichtung. In Abhängigkeit von dieser Zeitinformation steuert die Steuerungsvorrichtung den Antrieb für eine korrelierende Wegstrecke der Verstellung oder für eine korrelierende Zeitspanne der Verstellung an.

Hierzu wertet die Steuerungsvorrichtung die Zeitinformation aus. Im einfachsten Fall der Auswertung wird der Antrieb während der Übertragung des Ansteuerungssignals angesteuert. Weitere, komplexere Auswertungen ermöglichen das Erkennen von anderen Betriebsarten, beispielsweise eines Automatiklaufes, oder das Erkennen eines Defektes eines Betätigungselementes der Bedienungsvorrichtung, so daß die Funktion des defekten Betätigungselementes von einem anderen Betätigungselement übernommen wird.

Die Zeitinformation wird entsprechend einer vorteilhaften Ausgestaltung der Weiterbildung der Erfindung durch einen Kode realisiert, der zumindest einen Teil der Dauer der Betätigung charakterisiert. Dieser Kode ist beispielsweise in dem Ansteuerungssignal als eine Bitfolge enthalten und übermittelt beispielsweise die gesamte Dauer der Betätigung. Die Dauer der Betätigung wird alternativ in mehrere Zeitintervalle, beispielsweise 100ms, eingeteilt, und für jeweils ein Zeitintervall wird eine Bitfolge als Kode übertragen. Ist das Zeitintervall entsprechend kürzer, wird die Bitfolge oder eine andere Kodierung entsprechend angepaßt. So kann die Steuerung des Antriebes durch die Steuerungsvorrichtung mit nur geringer Verzögerung von dem Beginn der Betätigung erfolgen.

Die Zeitinformation ist entsprechend einer alternativen Ausgestaltung der Weiterbildung der Erfindung eine Übertragungsdauer, die zumindest einen Teil einer Dauer der Betätigung charakterisiert. Die Übertragungsdauer erfordert nicht eine kontinuierliche Übertragung des Ansteuerungssignals. Alternativ wird das Ansteuerungssignal in zeitlichen Abständen folgend für eine Verstellung übertragen und die Steuerung des Antriebs wird gestoppt, wenn innerhalb eines Zeitintervalls keine Übertragung eines Ansteuerungssignals mehr erfolgt.

In einer Ausgestaltung der alternativen Weiterbildung der Erfindung wird zumindest für die Übertragungsdauer der Antrieb zur Verstellung gesteuert. Beispielsweise kann der Antrieb zur Übertragungsdauer zeitlich proportional gesteuert werden, insbesondere entspricht die Zeitdauer der Steuerung im wesentlichen der Dauer der Betätigung. Weitere Betriebsarten sehen vor, daß beispielsweise für eine bestimmte Dauer der Betätigung ein Automatiklauf eines Fensterhebers gestartet wird. Das Betätigen der Bedienungsvorrichtung zum Schließen der Fensterscheibe für beispielsweise eine halbe Sekunde wird von der Steuerungsvorrichtung als Automatikbetriebsart erkannt und die Fensterscheibe wird über die Übertragungsdauer hinaus durch die Steuerung des Antriebs bis zur geschlossenen Position bewegt.

Eine weitere Ausgestaltung sieht vor, daß die Zeitinformation zumindest aus einer Startinformation und einer Endinformation besteht, die den Beginn beziehungsweise das Ende der Betätigung charakterisieren. Beispielsweise kann zwischen der Startinformation und der Endinformation der Antrieb zur Verstellung gesteuert werden. Durch eine Reduzierung der Übertragung auf die Startinformation und die Endinformation kann die Anzahl der nötigen Übertragungen minimiert werden.

Alternativ zu den zuvor genannten Weiterbildungen der Erfindung wird die Zeitinformation aus einer Unterbrechungsdauer des Ansteuerungssignals bestimmt, indem zumindest für eine Dauer einer Betätigung der Bedienungsvorrichtung die Übertragung des Ansteuerungssignals unterbrochen wird. So kann besonders vorteilhaft die Funktionsfähigkeit der Bedienungsvorrichtung und der einzelnen Betätigungselemente ständig überwacht werden. Fällt beispielsweise ein Betätigungselement zum Schließen einer Fensterscheibe aus, erkennt die Steuerungsvorrichtung nach einem Überwachungszeitraum, also einem Zeitraum innerhalb dessen die Steuerungsvorrichtung mindestens ein Signal für einen ungestörten Betrieb empfängt, den Defekt des Betätigungselementes. Mittels dieser Detektion kann die Funktion "Fenster schließen" mit der Zuordnung eines weiteren Betätigungselementes zur Funktion für einen Notbetrieb aufrechterhalten werden. Hierbei wird beispielsweise die Funktion "Fenster schließen" durch die Schaltstellung eines Kippschalters für die Funktion "Fenster heben" mit übernommen, indem sich für ein erneutes Betätigen des Kippschalters für die Funktion "Fenster heben" die Bewegungsrichtung umkehrt.

Alternativ zu der zuvor beschriebenen Auswertung der Ansteuerungssignale für eine Betriebsart durch die Steuerungsvorrichtung wird vorteilhafterweise die Betriebsart zur Verstellung anhand einer Auswertung einer Dauer einer Betätigung eines Bedienelementes der Bedienungsvorrichtung durch die Bedienungsvorrichtung bestimmt. Beispielsweise wird aus der Betätigung eines Betätigungselementes über eine Sekunde ein Automatikbetriebsart zum Senken der Fensterscheibe ausgewertet. Folgend wird vorteilhafterweise eine Betriebsartinformation über die ausgewertete Betriebsart von der Bedienungsvorrichtung an die Steuerungsvorrichtung übertragen, und die Steuerungsvorrichtung steuert den Antrieb entsprechend der Automatikbetriebsart.

Steht keine Betriebsartinformation zur Verfügung wird alternativ das Ansteuerungssignal entsprechend des Automatikbetriebes ständig übertragen bis die Fensterscheibe geöffnet ist. Das Ansteuerungssignal wird hier entsprechend der Betriebsart und damit beispielsweise über die Betätigungsdauer hinaus, übertragen.

Nach einer Ausführungsform der Erfindung werden die Ansteuerungssignale zyklisch übertragen, und eine Anzahl der übertragenen beziehungsweise nicht übertragenen Zyklen wird von der Steuerungsvorrichtung zur Verstellung ausgewertet. Eine zyklische Übertragung erhöht vorteilhafterweise die Sicherheit der Übertragung. Wird die Ansteuerungsinformation beispielsweise gestört übertragen, wird vorteilhafterweise zur Verifikation der Gültigkeit des Ansteuerungssignals eine Mindestanzahl der Zyklen, beispielsweise drei Zyklen, ausgewertet. Werden beispielsweise mindestens zwei der drei Zyklen als ordnungsgemäß übertragene Ansteuerungsinformationen von der Steuerungsvorrichtung erkannt, erfolgt die Verstellung der Verstelleinrichtung eines Kraftfahrzeugsitzes. Um keine größeren Verzögerungen hinnehmen zu müssen, sollte ein Zyklus ein entsprechend kurzes Zeitintervall, zum Beispiel weniger als 10ms, umfassen.

Darüber hinaus ist es von Bedeutung, daß insbesondere aufgrund einer Unfallsituation die Steuerungsvorrichtung einen Notbetrieb aktiviert. Im Notbetrieb wird jedes über die Luftschnittstelle übertragene Ansteuerungssignal so interpretiert, daß die Fensterscheibe durch die Steuerungsvorrichtung automatisch geöffnet wird. Der Notbetrieb wird durch einen Crash-Sensor, dem Auslösen eines Airbags, der Detektion eines Defektes innerhalb eines CAN-Bus-Systems oder anderer Initiatoren aktiviert.

Zusätzlich zu den über die Luftschnittstelle übertragenen Ansteuerungssignalen werden von Steuerungsvorrichtung vorteilhafterweise kabelgebundene Bedienungssignale, beispielsweise Bedienungssignale des Schlüssels oder des Schlosses oder CAN-Bus-Signale, ausgewertet. Die Ansteuerung der Bedienungssvorrichtung erfolgt somit im Normalbetrieb auch anhand der kabelgebundenen Bedienungssignale. Dagegen erfolgt in einem Notbetrieb die Ansteuerung der Steuerungsvorrichtung anhand der Ansteuerungssignale über die Luftschnittstelle.

Entsprechend einer bevorzugten Ausgestaltung der Erfindung wird das Ansteuerungssignal durch eine Absorptionsmodulation eines ersten magnetischen Wechselfeldes übertragen. Hierzu sendet die Steuerungsvorrichtung das erste magnetische Wechselfeld und die Güte eines Empfangsschaltkreises der Bedienungsvorrichtung wird zur Absorptionsmodulation für die Verstellung charakteristisch verändert. Die Steuerungsvorrichtung wertet zur Steuerung die Veränderung der Absorption des ersten magnetischen Wechselfeldes aus. Für ein derartiges Verfahren sind Transponder, die von der Steuerungsvorrichtung mit Energie versorgt werden, besonders vorteilhaft geeignet. An dem Transponder sind zur Bedienung beispielsweise elektrische Taster angeschlossen.

Die in der Steuerungsvorrichung angeordnete Transponderspule oder Sendespule und die Empfangsstufe des Transponders ermöglichen einerseits die Energieübertragung zum Transponder. Andererseits moduliert der Transponder die Güte der Empfangsstufe und damit die Energieabsorption aus dem Magnetfeld des Senders der Steuerungsvorrichtung. Die Absorptionsmodulation wird in der Steuerungsvorrichtung detektiert und als Datenstrom interpretiert. Die Tasten benötigen damit weder eine eigene Energieversorgung noch eine Kabelverbindung zwischen Tastatur und Steuerungsvorrichtung. Die Tastatur kann damit als wasserdichte Einheit gefertigt werden und an beliebiger Stelle angeordnet werden, wo das Magnetfeld für die Zuverlässigkeit der Funktion nur unerheblich gestört wird. Zur Vermeidung von Mißbrauch identifiziert sich der Transponder bei der Steuerungsvorrichtung.

Neben Transpondern sind auch alle weiteren Systeme zur Übertragung der Ansteuerungssignale über die Luftschnittstelle als Bedienungsvorrichtung geeignet. Vorteilhafterweise wird zur Übertragung des Ansteuerungssignals ein vom einem an die Bedienungsvorrichtung übertragenen ersten elektromagnetischen Funkwechselfeld unabhängiges zweites elektromagnetisches Funkwechselfeld von der Bedienungsvorrichtung an die Steuerungsvorrichtung übertragen. Das Funkwechselfeld ist beispielsweise ein kontinuierliches Signal oder besonders vorteilhaft ein Impuls oder Burst, der zyklisch oder auf Anforderung übertragen wird. Für ein derartiges Verfahren sind Interdigitalwandler, die von der Steuerungsvorrichtung mit Energie versorgt werden, besonders vorteilhaft geeignet.

Alternativ werden Bedienelemente der Bedienungsvorrichtung verwendet, die die Energie zum Senden der Ansteuerungssignale aus dem Bedienereignis selbst generieren. Als derartige Bedienungselemente sind alle Energiewandler geeignet, die vorzugsweise mechanische Energie der Bedienung in optische, akustische oder elektromagnetische Signalenergie wandeln. Diese Energiewandler nutzen vorzugsweise den Piezoeffekt zur Generierung eines elektrischen oder elektromagnetischen Impulses oder einer Oberflächenwelle aus.

Im Folgenden wird die Erfindung anhand von Ausführungsbeispielen bezugnehmend auf zeichnerische Darstellungen näher erläutert.

Dabei zeigen
- FIG 1: eine schematische Darstellung einer Bedienungsvorrichung,
- FIG 2a und 2b: eine schematische Darstellung der Funktionsweise einer Verstelleinrichtung mit Transpondern,
- FIG 3: eine schematische Darstellung der Funktionsweise einer Verstelleinrichtung mit Interdigitalwandler, und
- FIG 4a und 4b: eine weitere schematische Darstellung der Funktionsweise einer Verstelleinrichtung mit Tanspondem.

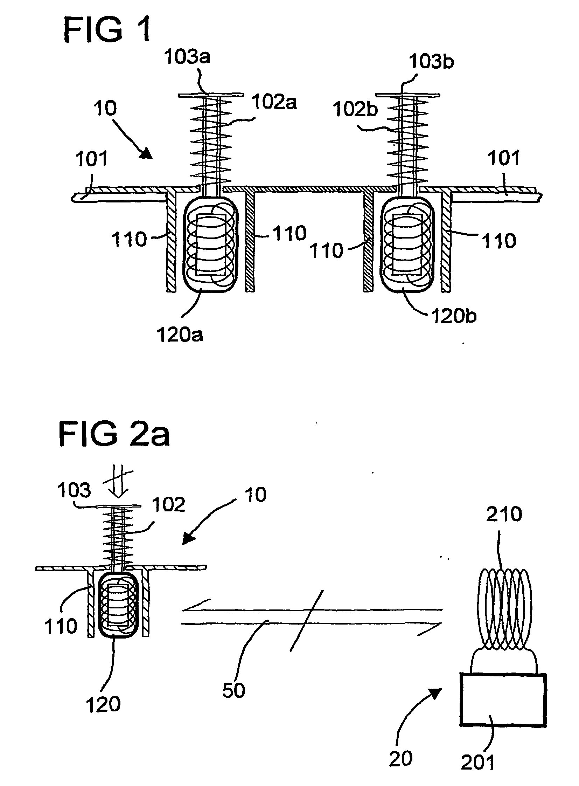

In FIG 1 ist eine Bedienungsvorrichtung 10 schematisch dargestellt. Die Bedienungsvorrichtung 10 wird als wasserdichte, kompakte Einheit in einem Kunststoffgehäuse 101 befestigt. Die Bedienungseinrichtung 10 weist zwei Taster 103a und 103b auf, die für eine entgegensetzte Richtung, beispielsweise für das Öffnen oder Schließen einer Kraftfahrzeugfensterscheibe, betätigt werden.

Der jeweiligen Verstellrichtung ist ein Transponder 120a beziehungsweise 120b zugeordnet, der an dem jeweiligen Taster 103a beziehungsweise 103b befestigt ist. Mit einer Feder 102a, 102b wird der Transponder 120a, 120b innerhalb einer Schirmung 110 gehalten.

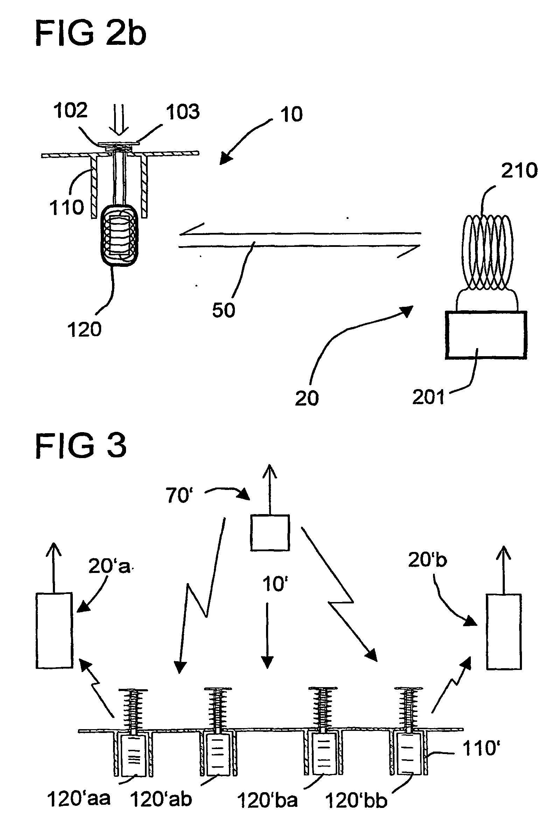

Ein Transponder 120 steht über eine Luftschnittstelle 50 mit einer Steuerungsvorrichtung 20 in Verbindung, wie es beispielhaft in der FIG 2b dargestellt ist. Hierzu wird der Taster 103 gegen die Federkraft der Feder 102 betätigt. Mit der Betätigung wird der Transponder 120 aus der Schirmung 110 bewegt. Befindet sich der Transponder 120 geschirmt innerhalb der Schirmung 110, wie in FIG 2a dargestellt, ist eine Übertragung von Ansteuerungssignalen unterbunden. Zur Übertragung der Ansteuerungssignale sendet die Steuerungsvorrichtung 20 über die Erregerspule 210 ein erstes magnetisches Wechselfeld über die Luftschnittstelle 50 an den aus der Schirmung 110 bewegten Transponder 120. Die Luftschnittstelle 50 ermöglicht im Gegensatz zu kabelgebundenen Schnittstellen eine von einer Kabelverlegung unabhängige Anordnung der Bedienungsvorrichtung 10, beispielsweise nach Design-Kriterien.

Die Güte des Empfangsschaltkreises des Transponders 120 wird für die Verstellungsrichtung charakteristisch verändert, beispielsweise geschalten. Durch die Veränderung der Güte wird die Absorption durch den Empfangsschaltkreis des Transponders 120 moduliert und mit der Modulation das Ansteuerungssignal übertragen. Nach einer Demodulation durch die Auswerteelektronik 201 der Steuerungsvorrichtung 20 wird das Ansteuerungssignal ausgewertet.

Alternativ, in den FIG 1 bis 2b nicht dargestellt, wird der Transponder 120 für eine Betätigung in die Schirmung 110 bewegt und die Übertragung unterbrochen. Die Unterbrechung wird von der Auswerteelektronik 201 ausgewertet und der Antrieb zur Verstellung gesteuert.

In FIG 3 ist eine Variante der Erfindung dargestellt. Alternativ zu den Transpondern 120 aus FIG 2a und 2b werden Interdigitalwandler 120'aa, 120'ab, 120'ba, 120'bb eingesetzt. Ein Sender 70' sendet Bursts oder elektromagnetische Impulse, deren Frequenz auf Antennen (in FIG 3 nicht dargestellt) der Interdigitalwandler 120'aa, 120'ab, 120'ba, 120'bb abgestimmt sind. Wird nun ein Interdigitalwandler 120'aa, 120'ab, 120'ba, 120'bb zur Betätigung aus der Schirmung 110' bewegt, empfängt die Antenne des Interdigitalwandlers 120'aa, 120'ab, 120'ba, 120'bb den Burst oder elektromagnetischen Impuls und erzeugt mindestens eine Oberflächenwelle, die an den für den Interdigitalwandler 120'aa, 120'ab, 120'ba, 120'bb charakteristischen Fingern reflektiert wird. Die reflektierten Signale werden wiederum als elektromagnetische Wellen an die Steuerungsvorrichtungen 20'a und 20'b übertragen. Die charakteristisch reflektierten Oberflächenwellen erzeugen eine charakteristische Impulsfolge, die von den Steuerungsvorrichtungen 20'a und 20'b ausgewertet werden. Dadurch ist eine eindeutige Zuordnung der Betätigung zur Verstellung der entsprechenden Verstelleinrichtung möglich.

Zusätzliche konstruktive Vorteile der Erfindung werden durch die Einsparung der Kabel und Stecker der elektrischen Schnittstelle kabelgebundener Systeme erzielt. Weiterhin ermöglicht insbesondere diese Ausgestaltung ohne elektrische Schnittstelle eine größere Designfreiheit für die Anordnung der Bedienungsvorrichtung innerhalb einer Fahrzeugtür, eines Kraftfahrzeugsitzes oder im Armaturenbrett.

Alternativ, in FIG 3 nicht dargestellt, ist es auch möglich, daß anstelle des Senders 70' jede Steuerungsvorrichtung 20'a beziehungsweise 20'b einen eigenen Burst mit einer für die Steuerungsvorrichtung 20'a beziehungsweise 20'b spezifischen Übertragungfrequenz sendet, oder die Ansteuerungssignale für die beiden Steuerungsvorrichtungen 20'a beziehungsweise 20'b werden zeitlich disjunkt übertragen.

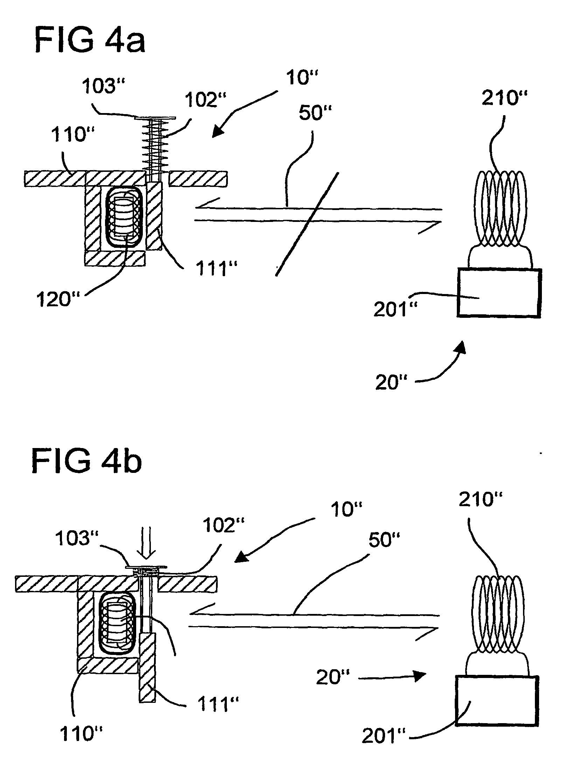

In FIG 4a und 4b ist eine alternative Ausführungsform der Erfindung dargestellt. Anstelle des Transponders 120" wird eine mit einem Taster 103" der Bedienungsvorrichtung 10" verbundene bewegliche Schirmung 111" betätigt. Die bewegliche Schirmung 111" wird durch die Betätigung des Tasters 103" entweder verschoben oder geklappt, so daß der Transponder 120" zur Übertragung des Ansteuerungssignals über die Luftschnittstelle 50" zumindest in Richtung der Sendespule 210" nicht geschirmt ist.

Durch die erfindungsgemäße Lösung ist die Funktionssicherheit und Zuverlässigkeit der Ansteuerung der Steuerungsvorrichtung durch die Bedienungsvorrichtung gegen äußere Einflüsse verbessert. Im Gegensatz zu kabelgebundenen Systemen sind Systeme mit einer Luftschnittstelle unempfindlicher gegen mechanische Einwirkungen, die beispielsweise in einer Unfallsituation einen Notbetrieb des Systems beeinflussen. Ein anderer vorteilhafter Aspekt insbesondere dieser Ausgestaltung ist, daß im Vergleich zu kabelgebundenen Systemen eine Störung des Systems durch Wassereinbruch reduziert ist, indem die Bedienungvorrichtung als gedichtete Einheit ohne elektrische Schnittstellen ausgebildet ist.

### Bezugszeichenliste

- 10, 10', 10": Bedienungsvorrichtung
- 101: Kunststoffgehäuse
- 102, 102", 102a, 102b: Taster
- 103, 103", 103a, 103b: Feder
- 110, 110": Schirmung
- 111": bewegliche Schirmung
- 120, 120", 120a, 120b: Transponder
- 120'aa, 120'ab, 120'ba, 120'bb: Interdigitalwandler
- 50, 50": Luftschnittstelle
- 20, 20", 20'a, 20'b: Steuerungsvorrichtung
- 210,210": Sendespule
- 201, 201": Auswerteelektronik
- 70': Sender

## Patentansprüche

1. Verfahren zur Verstellung einer Sitzverstellung, eines Fensterhebers oder eines Schiebedachs eines Kraftfahrzeugs durch eine fremdkraftbetätigte Verstelleinrichtung mit einem Antrieb zur Verstellung, einer den Antrieb steuernden Steuerungsvorrichtung (20, 20", 20'a, 20'b), einer Bedienungsvorrichtung (10, 10', 10"), durch deren manuelle Betätigung mindestens ein charakterisiertes Ansteuerungssignal zur Ansteuerung an die Steuerungsvorrichtung (20, 20", 20'a, 20'b) von einer an der Bedienungsvorrichtung (10, 10', 10") angeordneten Übertragungsvorrichtung (120, 120", 120a, 120b, 120'aa, 120'ab, 120'ba, 120'bb) über eine Luftschnittstelle (50, 50") übertragen und der Antrieb zur Verstellung durch die Steuerungsvorrichtung (20, 20", 20'a, 20'b) anhand des über die Luftschnittstelle (50, 50") übertragenen, der Verstellrichtung zugeordneten Ansteuerungssignals gesteuert wird,
**dadurch gekennzeichnet, dass**
- jeder Verstellrichtung eine Übertragungsvorrichtung (120, 120", 120a, 120b, 120'aa, 120'ab, 120'ba, 120'bb) zugeordnet wird,
- die Bedienungsvorrichtung (10, 10', 10") über die Luftschnittstelle (50, 50") mit Energie versorgt wird,
- die zu einer Bedienung der Bedienungsvorrichtung (10, 10', 10") korrelierenden Signale von der Steuerungsvorrichtung (20, 20", 20'a, 20'b) oder einem zentralen Sender (70') über die Luftschnittstelle (50, 50") übertragen werden,
- die Charakteristik des Ansteuerungssignals zur Ansteuerung der Steuerungsvorrichtung (20, 20", 20'a, 20'b) von der Bedienungsvorrichtung (10, 10', 10") entsprechend der Verstellrichtung verändert wird und
- die Steuerungsvorrichtung (20, 20", 20'a, 20'b) das Ansteuerungssignal zuordnet und den Antrieb in die Richtung steuert, die dem über die Luftschnittstelle (50, 50") übertragenen, von der Bedienungsvorrichtung (10, 10', 10") entsprechend der Verstellrichtung veränderten Ansteuerungssignal entspricht.

2. Verfahren nach Anspruch 1, **dadurch gekennzeichnet, dass** das von der Steuerungsvorrichtung (20, 20", 20'a, 20'b) oder dem Sender (70') abgegebene Signal mittels Absorptionsmodulation durch die Übertragungsvorrichtung (120, 120", 120a, 120b, 120'aa, 120'ab, 120'ba, 120'bb) verändert wird.

3. Verfahren nach Anspruch 2, **dadurch gekennzeichnet, dass** die Übertragungsvorrichtung (120, 120", 120a, 120b, 120'aa, 120'ab, 120'ba, 120'bb) zumindest in einer Richtung der Verstellung abgeschirmt wird.

4. Verfahren nach Anspruch 3, **dadurch gekennzeichnet, dass** die Übertragungsvorrichtung (120, 120", 120a, 120b, 120'aa, 120'ab, 120'ba, 120'bb) durch die manuelle Betätigung der Bedienungsvorrichtung (10, 10') in eine feststehende Schirmung (110, 110') hineinbewegt oder aus der Schirmung (110, 110') herausbewegt wird.

5. Verfahren nach Anspruch 3 oder 4, **dadurch gekennzeichnet, dass** eine durch die manuelle Betätigung der Bedienungsvorrichtung (10") betätigbare bewegliche Schirmung (111") die Übertragungsvorrichtung (120") abschirmt oder zur Übertragung eines Ansteuersignals nicht abschirmt.

6. Verfahren einem der vorhergehenden Ansprüche, **dadurch gekennzeichnet, dass** die Richtung der Verstellung durch einen Richtungskode im Ansteuerungssignal charakterisiert wird.

7. Verfahren einem der vorhergehenden Ansprüche, **dadurch gekennzeichnet, dass** die Richtung der Verstellung durch die Übertragungsfrequenz des Ansteuerungssignals charakterisiert wird.

8. Verfahren nach einem der vorhergehenden Ansprüche, **dadurch gekennzeichnet, dass** das Ansteuerungssignal eine Zeitinformation über eine Betätigung der Bedienungsvorrichtung aufweist.

9. Verfahren nach Anspruch 8, **dadurch gekennzeichnet, dass** die Zeitinformation ein Kode oder eine Übertragungsdauer ist, die zumindest einen Teil einer Dauer der Betätigung charakterisiert.

10. Verfahren nach Anspruch 9, **dadurch gekennzeichnet, dass** zumindest für die Übertragungsdauer der Antrieb zur Verstellung gesteuert wird.

11. Verfahren nach Anspruch 8, **dadurch gekennzeichnet, dass** die Zeitinformation zumindest aus einer Startinformation und einer Endinformation besteht, die den Beginn beziehungsweise das Ende der Betätigung charakterisieren.

12. Verfahren nach Anspruch 8, **dadurch gekennzeichnet, dass** die Zeitinformation aus einer Unterbrechungsdauer des Ansteuerungssignals bestimmt wird, indem zumindest für eine Dauer einer Betätigung der Bedienungsvorrichtung (10, 10', 10") die Übertragung des Ansteuerungssignals unterbrochen wird, und insbesondere zumindest für die Unterbrechungsdauer der Antrieb zur Verstellung gesteuert wird.

13. Verfahren nach einem der Ansprüche 8 bis 12, **dadurch gekennzeichnet, dass** eine Betriebsart zur Verstellung anhand einer Auswertung der Zeitinformation durch die Steuerungsvorrichtung (20, 20", 20'a, 20'b) bestimmt wird.

14. Verfahren nach einem der Ansprüche 1 bis 7, **dadurch gekennzeichnet, dass** eine Betriebsart zur Verstellung anhand einer Auswertung einer Dauer einer Betätigung eines Bedienelementes (103, 103a, 103b, 103") der Bedienungsvorrichtung (10, 10', 10") durch die Bedienungsvorrichtung (10, 10', 10") bestimmt wird.

15. Verfahren nach Anspruch 14, **dadurch gekennzeichnet, dass** eine Betriebsartinformation über die ausgewertete Betriebsart von der Bedienungsvorrichtung (10, 10', 10") an die Steuerungsvorrichtung (20, 20", 20'a, 20'b) übertragen wird, und die Steuerungsvorrichtung (20, 20", 20'a, 20'b) den Antrieb entsprechend der Betriebsart steuert, und das Ansteuerungssignal entsprechend der Betriebsart, insbesondere unabhängig von der Betätigungsdauer, übertragen wird.

16. Verfahren nach einem der vorhergehenden Ansprüche, **dadurch gekennzeichnet, dass** die Ansteuerungssignale zyklisch übertragen werden, eine Anzahl der übertragenen beziehungsweise nicht übertragenen Zyklen von der Steuerungsvorrichtung (20, 20", 20'a, 20'b) zur Verstellung ausgewertet wird, und anhand einer bestimmten Anzahl von Zyklen ein Automatiklauf der Verstellung gesteuert wird.

17. Verfahren nach Anspruch 16, **dadurch gekennzeichnet, dass** zur Verifikation einer Gültigkeit des Ansteuerungssignals eine Mindestanzahl der Zyklen ausgewertet wird.

18. Verfahren nach einem der vorhergehenden Ansprüche, **dadurch gekennzeichnet, dass** insbesondere aufgrund einer Unfallsituation die Steuerungsvorrichtung (20, 20", 20'a, 20'b) einen Notbetrieb aktiviert, und jedes über die Luftschnittstelle (50,50") übertragene Ansteuerungssignal zum automatischen Öffnen der Fensterscheibe durch die Steuerungsvorrichtung (20, 20", 20'a, 20'b) interpretiert wird.

19. Verfahren nach Anspruch 18, **dadurch gekennzeichnet, dass** in einem Normalbetrieb die Ansteuerung der Steuerungsvorrichtung (20, 20", 20'a, 20'b) anhand kabelgebundener Bedienungssignale erfolgt, und in einem Notbetrieb, insbesondere für einen Fensterheber, die Ansteuerung der Steuerungsvorrichtung (20, 20", 20'a, 20'b) anhand der Ansteuerungssignale über die Luftschnittstelle (50,50") erfolgt.

20. Verfahren nach einem der vorhergehenden Ansprüche, **dadurch gekennzeichnet, dass** für einen Automatiklauf der Verstellung das Ansteuerungssignal mit einem Automatikkode kodiert wird.

21. Verfahren nach einem der vorhergehenden Ansprüche, **dadurch gekennzeichnet, dass** das Ansteuerungssignal durch eine Absorptionsmodulation eines ersten magnetischen Wechselfeldes übertragen wird, indem die Steuerungsvorrichtung (20, 20", 20'a, 20'b) das erste magnetische Wechselfeld sendet, die Güte eines Empfangsschaltkreises der Bedienungsvorrichtung (10, 10', 10") zur Absorptionsmodulation für die Verstellung charakteristisch verändert wird, und die Steuerungsvorrichtung (20, 20", 20'a, 20'b) zur Steuerung die Veränderung der Absorption des ersten magnetischen Wechselfeldes auswertet.

22. Verfahren nach einem der Ansprüche 1 bis 20, **dadurch gekennzeichnet, dass** zur Übertragung des Ansteuerungssignals ein vom einem an die Bedienungsvorrichtung (10, 10', 10") übertragenen ersten elektromagnetischen Funkwechselfeld unabhängiges zweites elektromagnetisches Funkwechselfeld von der Bedienungsvorrichtung (10, 10', 10") an die Steuerungsvorrichtung (20, 20", 20'a, 20'b) übertragen wird.

23. Fremdkraftbetätigte Verstelleinrichtung zur Verstellung eines Sitzes, einer Kopfstütze oder einer Fensterscheibe eines Kraftfahrzeugs, mit einem Antrieb zur Verstellung, einer den Antrieb steuernden Steuerungsvorrichtung (20, 20", 20'a, 20'b), einer Bedienungsvorrichtung (10, 10', 10"), an der eine erste Übertragungsvorrichtung (120, 120", 120a, 120b, 120'aa, 120'ab, 120'ba, 120'bb) angeordnet ist und durch deren manuelle Betätigung die Steuerungsvorrichtung (20, 20", 20'a, 20'b) von der Bedienungsvorrichtung (10, 10', 10") angesteuert wird, und einer an der Steuerungsvorrichtung angeordneten zweiten Übertragungsvorrichtung (210, 210") zur Fern-Übertragung eines durch die Betätigung der Bedienungsvorrichtung (10, 10', 10") charakterisierten, der Verstellrichtung zugeordneten Ansteuerungssignals über eine Luftschnittstelle (50, 50"),
**dadurch gekennzeichnet, dass**
- jeder Verstellrichtung eine erste Übertragungsvorrichtung (120, 120", 120a, 120b, 120'aa, 120'ab, 120'ba, 120'bb) der Bedienungsvorrichtung (10, 10', 10") zugeordnet ist,
- die Bedienungsvorrichtung (10, 10', 10") über die Luftschnittstelle (50, 50") mit Energie versorgt wird,
- ein zentraler Sender (70') oder die an der Steuerungsvorrichtung angeordnete zweite Übertragungsvorrichtung (210, 210") die zu einer Bedienung der Bedienungsvorrichtung (10, 10', 10") korrelierenden Signale über die Luftschnittstelle (50, 50") überträgt,
- die Bedienungsvorrichtung (10, 10', 10") die Charakteristik des Ansteuerungssignals zur Ansteuerung der Steuerungsvorrichtung (20, 20", 20'a, 20'b) entsprechend der Verstellrichtung verändert und
- die Steuerungsvorrichtung (20, 20", 20'a, 20'b) das Ansteuerungssignal zuordnet und den Antrieb in die Richtung steuert, die dem über die Luftschnittstelle (50, 50") übertragenen, von der Bedienungsvorrichtung (10, 10', 10") entsprechend der Verstellrichtung veränderten Ansteuerungssignal entspricht.

24. Fremdkraftbetätigte Verstelleinrichtung nach Anspruch 23, **dadurch gekennzeichnet, dass** zur Bedienung ein oder mehrere Taster (103, 103a, 103b, 103") der Bedienungsvorrichtung (10, 10', 10") angeordnet sind, deren Schaltzustand auf eine erste Übertragungsvorrichtung (120, 120", 120a, 120b, 120'aa, 120'ab, 120'ba, 120'bb) übertragbar ist.

25. Fremdkraftbetätigte Verstelleinrichtung nach Anspruch 24, **dadurch gekennzeichnet, dass** zur Bedienung ein oder mehrere Taster (103, 103a, 103b, 103") der Bedienungsvorrichtung (10,10',10") angeordnet sind, deren Schaltzustand auf eine Schirmung (110, 110', 110", 111 ") der Übertragungsvorrichtung (120, 120", 120a, 120b, 120'aa, 120'ab, 120'ba, 120'bb) übertragbar ist.

26. Fremdkraftbetätigte Verstelleinrichtung nach Anspruch 24 oder 25, **dadurch gekennzeichnet, dass** die erste Übertragungsvorrichtung (120, 120", 120a, 120b, 120'aa, 120'ab, 120'ba, 120'bb) der Bedienungsvorrichtung (10,10',10") für zumindest eine Richtung der Verstellung ein Sendeempfangsmodul mit einer Schirmung (110, 110', 110", 111 ") aufweist, wobei zur Bedienung die Schirmung (110, 110', 110", 111 ") manuell veränderbar ist.

27. Fremdkraftbetätigte Verstelleinrichtung nach Anspruch 26, **dadurch gekennzeichnet, dass** das Sendeempfangsmodul in die Schirmung (110, 110', 110", 111 ") hineinbewegbar ist, oder aus der Schirmung (110, 110', 110", 111") herausbewegbar ist.

28. Fremdkraftbetätigte Verstelleinrichtung nach Anspruch 26 oder 27, **dadurch gekennzeichnet, dass** das Sendeempfangsmodul ein Transponder (120, 120", 120a, 120b ist.

29. Fremdkraftbetätigte Verstelleinrichtung nach Anspruch 26 oder 27, **dadurch gekennzeichnet, dass** das Sendeempfangsmodul ein Interdigitalwandler (120'aa, 120'ab, 120'ba, 120'bb) mit einer Sendeempfangsantenne ist.

## Claims

1. Method for adjusting a seat, window lift or sun-roof of a vehicle through an adjustment device, operated by external force, having an adjustment drive, a control device (20, 20", 20'a, 20'b) controlling the drive, an operating device (10, 10', 10") through whose manual actuation at least one **characterised** control signal is transferred through an air interface (50, 50") for control to the control device (20, 20", 20'a, 20'b) from a transmission device (120, 120", 120a, 120b, 120'aa, 120'ab, 120'ba, 120'bb) mounted on the operating device (10, 10', 10") and the adjustment device is controlled through the control device (20, 20", 20'a, 20'b) from the control signal associated with the adjustment direction and transmitted through the air interface (50, 50"),
**characterised in that**
- each adjustment direction is allocated a transmission device (120, 120", 120a, 120b, 120'aa, 120'ab, 120'ba, 120'bb)
- the operating device (10, 10', 10") is supplied with energy through the air interface (50, 50"),
- the signal correlating to an operation of the operating device (10, 10', 10") is transmitted from the control device (20, 20", 20'a, 20'b) or a central sender through the air interface (50, 50")
- the characteristic of the control signal for the control of the control device (20, 20", 20'a, 20'b) is varied by the operating device (10, 10', 10") in accordance with the adjustment direction and
- the control device (20, 20", 20'a, 20'b) associates the control signal and controls the drive in the direction which corresponds to the control signal transmitted across the air interface (50, 50''') and varied by the operating device (10, 10', 10") in accordance with the adjustment direction.

2. Method according to claim 1, **characterised in that** the signal emitted by the control device (20, 20", 20'a, 20'b) or the sender (70') is varied by means of absorption modulation through transmission device (120, 120", 120a, 120b, 120'aa, 120'ab, 120'ba, 120'bb).

3. Method according to claim 2, **characterised in that** the transmission device ((120, 120", 120a, 120b, 120'aa, 120'ab, 120'ba, 120'bb) is screened at least in one adjustment direction.

4. Method according to claim 3, **characterised in that** the transmission device (120, 120", 120a, 120b, 120'aa, 120'ab, 120'ba, 120'bb) is moved into a fixed screen (110, 110') or out from a fixed screen (110, 110') through manual actuation of the operating device (10, 10').

5. Method according to claim 3 or 4, **characterised in that** a movable screen (111") which can be actuated by manual actuation of the operating device (10") screens the transmission device (120") or for transmitting a control signal does not screen same.

6. Method according to one of the preceding claims, **characterised in that** the adjustment direction is **characterised by** a direction code in the control signal.

7. Method according to one of the preceding claims, **characterised in that** the adjustment direction is **characterised by** the transmission frequency of the control signal.

8. Method according to one of the preceding claims, **characterised in that** the control signal has time data on an actuation of the operating device.

9. Method according to claim 8, **characterised in that** the time data is a code or transmission period which characterises at least one part of a period of the actuation.

10. Method according to claim 9, **characterised in that** the adjustment drive is controlled at least for the transmission period.

11. Method according to claim 8, **characterised in that** the time data consists of at least one start information and end information which characterise the beginning and end of actuation.

12. Method according to claim 8, **characterised in that** the time data is determined from an interruption period of the control signal **in that** at least for a period of an actuation of the operating device (10, 10', 10") the transmission of the control signal is interrupted and in particular the adjustment drive is controlled at least for the interruption period.

13. Method according to one of claims 8 to 12, **characterised in that** an operating mode for adjustment is determined from evaluating the time data through the control device (20, 20", 20'a, 20'b).

14. Method according to one of claims 1 to 7, **characterised in that** an operating mode for adjustment is determined from an evaluation of a period of actuation of an operating element (103, 103a, 103b, 103") of the operating device (10, 10', 10") through the operating device (10, 10', 10").

15. Method according to claim 14, **characterised in that** operating mode data on the evaluated operating mode is transmitted from the operating device (10, 10', 10") to the control device (20, 20", 20'a, 20'b), and the control device (20, 20", 20'a, 20'b) controls the drive according to the operating mode, and the control signal is transmitted corresponding to the operating mode, more particularly independently of the operating duration.

16. Method according to one of the preceding claims, **characterised in that** the control signals are transmitted cyclically, a number of transmitted or non-transmitted cycles is evaluated by the control device (20, 20", 20'a, 20'b) for adjustment, and an automatic run of the adjustment is controlled from a determined number of cycles.

17. Method according to claim 16, **characterised in that** a minimum number of cycles is evaluated to verify the validity of the control signal.

18. Method according to one of the preceding claims, **characterised in that** the control device (20, 20", 20'a, 20'b), particularly following an accident situation activates an emergency operation, and each control signal transmitted through the air interface (50, 50") is interpreted by the control device (20, 20", 20'a, 20'b) for automatically opening the window pane.

19. Method according to claim 18, **characterised in that** during normal operation the control of the control device (20, 20", 20'a, 20'b) is carried out from cable-linked operating signals, and during emergency operation, particularly for a window lift, the control of the control device (20, 20", 20'a, 20'b) takes place from the control signals through the air interface (50, 50").

20. Method according to one of the preceding claims, **characterised in that** for automatic running of the adjustment device the control signal is coded with an automatic code.

21. Method according to one of the preceding claims, **characterised in that** the control signal is transmitted through an absorption modulation of a first magnetic alternating field, **in that** the control device (20, 20", 20'a, 20'b) transmits the first magnetic alternating field, the quality of a receiver circuit of the operating device (10, 10', 10") for absorption modulation for the adjustment is characteristically changed, and the control device (20, 20", 20'a, 20'b) for control evaluates the change of the absorption of the first magnetic alternating field.

22. Method according to one of claims 1 to 20, **characterised in that** for transmitting the control signal a second electromagnetic radio alternating field independently of a first electromagnetic radio alternating field transmitted to the operating device (10, 10', 10") is transmitted from the operating device (10, 10', 10") to the control device (20, 20", 20'a, 20'b).

23. Adjustment device operated by external force for adjusting a seat, head restraint or window lift of a motor vehicle, having an adjustment drive, a control device (20, 20", 20'a, 20'b) controlling the drive, an operating device (10, 10', 10") on which a first transmission device (120, 120", 120a, 120b, 120'aa, 120'ab, 120'ba, 120'bb) is mounted and through whose manual actuation the control device (20, 20", 20'a, 20'b) is controlled by the operating device (10, 10', 10"), and a second transmission device (210, 210") mounted on the control device for the remote transmission through an air interface (50, 50") of a control signal associated with the adjustment direction and **characterised by** the actuation of the operating device (10, 10', 10"),
**characterised in that**
- each adjustment direction is allocated a first transmission device (120, 120", 120a, 120b, 120'aa, 120'ab, 120'ba, 120'bb) of the operating device (10, 10', 10"),
- the operating device (10, 10', 10") is supplied with energy through the air interface (50, 50"),
- a central sender (70') or the second transmission device (210, 210") arranged on the control device transmits the signal correlating to an operation of the operating device (10, 10', 10") through the air interface (50, 50"),
- the operating device (10, 10', 10") varies the characteristic of the control signal for the control of the control device (20, 20", 20'a, 20'b) in accordance with the adjustment direction and
- the control device (20, 20", 20'a, 20'b) associates the control signal and controls the drive in the direction which corresponds to the control signal transmitted across the air interface (50, 50'") and varied by the operating device (10,10',10") in accordance with the adjustment direction.

24. Adjustment device actuated by external force according to claim 23, **characterised in that** for operation there are one or more buttons (103, 103a, 103b, 103") on the operating device (10, 10', 10") whose switching state can be transferred to a first transmission device (120, 120", 120a, 120b, 120'aa, 120'ab, 120'ba, 120'bb).

25. Adjustment device actuated by external force according to claim 24, **characterised in that** for operation there are one or more buttons (102, 103a, 103b, 103") on the operating device (10, 10', 10") whose switching state can be transferred to a screen (110, 110', 110", 111") of the first transmission device (120, 120", 120a, 120b, 120'aa, 120'ab, 120'ba, 120'bb).

26. Adjustment device actuated by external force according to claim 24 or 25, **characterised in that** the first transmission device (120, 120", 120a, 120b, 120'aa, 120'ab, 120'ba, 120'bb) of the operating device (10, 10', 10") has for at least one adjustment direction a transmission receiver module with a screen (110, 110', 110", 111'") whereby the screen (110, 110', 110", 111"') can be changed manually for operation.

27. Adjustment device actuated by external force according to claim 26, **characterised in that** the transmission receiving module can be moved into a screen (110, 110', 111") or the transmission receiver module can be moved out from a screen (110, 110', 110", 111").

28. Adjustment device actuated by external force according to one of claims 26 or 27, **characterised in that** the transmission receiver module is a transponder (120, 120", 120a, 120b).

29. Adjustment device actuated by external force according to one of claims 26 or 27, **characterised in that** the transmission receiver module is an inter digital converter (120'aa, 120'ab, 120'ba, 120'bb) with a transmission receiver antenna.

## Revendications

1. Procédé pour déplacer un dispositif de réglage de siège, un lève-vitre ou un toit coulissant d'un véhicule automobile par un système de déplacement actionné par une force externe, comportant un entraînement pour le déplacement, un dispositif de commande (20, 20", 20'a, 20'b) commandant l'entraînement, un dispositif de manipulation (10, 10', 10") par l'actionnement manuel duquel au moins un signal de pilotage caractérisant est transmis au dispositif de commande (20, 20", 20'a, 20'b) par un dispositif de transmission (120, 120", 120a, 120b, 120'aa, 120'ab, 120'ba, 120'bb), agencé sur le dispositif de manipulation (10, 10', 10"), via une interface aérienne (50, 50") et l'entraînement destiné au déplacement est commandé par le dispositif de commande (20, 20", 20'a, 20'b) en se basant sur le signal de pilotage transmis via l'interface aérienne (50, 50") et associé à la direction de déplacement, **caractérisé en ce que**
- à chaque direction de déplacement est associé un dispositif de transmission (120, 120", 120a, 120b, 120'aa, 120'ab, 120'ba, 120'bb),
- le dispositif de manipulation (10, 10', 10") est alimenté en énergie via l'interface aérienne (50, 50"),
- les signaux corrélés pour une manipulation du dispositif de manipulation (10, 10', 10") sont transmis par le dispositif de commande (20, 20", 20'a, 20'b) ou par un émetteur central (70') via l'interface aérienne (50, 50"),
- la caractéristique du signal de pilotage pour piloter le dispositif de commande (20, 20", 20'a, 20'b) est modifiée par le dispositif de manipulation (10, 10', 10") en correspondance de la direction de déplacement, et
- le dispositif de commande (20, 20", 20'a, 20'b) associe le signal de pilotage et commande l'entraînement dans la direction qui correspond au signal de pilotage transmis via l'interface aérienne (50, 50") et modifié par le dispositif de manipulation (10, 10' 10") en correspondance de la direction de déplacement.

2. Procédé selon la revendication 1, **caractérisé en ce que** le signal émis par le dispositif de commande (20, 20", 20'a, 20'b) ou par l'émetteur (70') est modifié par modulation d'absorption par le dispositif de transmission (120, 120 ", 120a, 120b, 120'aa, 120'ba, 120'bb).

3. Procédé selon la revendication 2, **caractérisé en ce que** le dispositif de transmission (120, 120", 120a, 120b, 120'aa, 120'ab, 120'ba, 120'bb) est blindé dans au moins une direction du déplacement.

4. Procédé selon la revendication 3, **caractérisé en ce que** le dispositif de transmission (120, 120", 120a, 120b, 120'aa, 120'ab, 120'ba, 120'bb) est déplacé jusque dans un blindage fixe (110, 110') ou hors du blindage (110, 110') par l'actionnement manuel du dispositif de manipulation (10, 10').

5. Procédé selon la revendication 3 ou 4, **caractérisé en ce qu'**un blindage mobile (111") susceptible d'être actionné par l'actionnement manuel du dispositif de manipulation (10") blinde le dispositif de transmission (120") ou ne le blinde pas pour transmettre un signal de pilotage.

6. Procédé selon l'une des revendications précédentes, **caractérisé en ce que** la direction du déplacement est **caractérisée par** un code de direction dans le signal de pilotage.

7. Procédé selon l'une des revendications précédentes, **caractérisé en ce que** la direction du déplacement est **caractérisée par** la fréquence de transmission du signal de pilotage.

8. Procédé selon l'une des revendications précédentes, **caractérisé en ce que** le signal de pilotage présente une information temporelle sur un actionnement du dispositif de manipulation.

9. Procédé selon la revendication 8, **caractérisé en ce que** l'information temporelle est un code ou une durée de transmission qui caractérise au moins une partie d'une durée de l'actionnement.

10. Procédé selon la revendication 9, **caractérisé en ce que** l'entraînement pour le déplacement est commandé au moins pendant la durée de transmission.

11. Procédé selon la revendication 8, **caractérisé en ce que** l'information temporelle est constituée au moins par une information initiale et par une information finale qui caractérisent respectivement le début et la fin de l'actionnement.

12. Procédé selon la revendication 8, **caractérisé en ce que** l'information temporelle est déterminée à partir d'une durée d'interruption du signal de pilotage, du fait que la transmission du signal de pilotage est interrompue au moins pendant la durée d'un actionnement du dispositif de manipulation (10, 10', 10"), et **en ce que** l'entraînement destiné au déplacement est commandé en particulier au moins pendant la durée d'interruption.

13. Procédé selon l'une des revendications 8 à 12, **caractérisé en ce qu'**un type de fonctionnement pour le déplacement est défini par le dispositif de commande (20, 20", 20'a, 20'b) en se basant sur une évaluation de l'information temporelle.

14. Procédé selon l'une des revendications 1 à 7, **caractérisé en ce qu'**un type de fonctionnement pour le déplacement est défini par le dispositif de manipulation (10, 10', 10") en se basant sur une évaluation d'une durée d'un actionnement d'un élément de manipulation (103, 103a, 103b, 103") du dispositif de manipulation (10, 10', 10").

15. Procédé selon la revendication 14, **caractérisé en ce qu'**une information sur le type de fonctionnement commandé est transmise au dispositif de commande (20, 20", 20'a, 20'b) par le dispositif de manipulation (10, 10', 10"), et **en ce que** le dispositif de commande (20, 20", 20'a, 20'b) commande l'entraînement en correspondance du type de fonctionnement, et le signal de pilotage est transmis en correspondance du type de fonctionnement, en particulier indépendamment de la durée d'actionnement.

16. Procédé selon l'une des revendications précédentes, **caractérisé en ce que** les signaux de pilotage sont transmis cycliquement, un nombre respectif des cycles transmis et des cycles non transmis étant évalué par le dispositif de commande (20, 20", 20'a, 20'b) pour le déplacement, et **en ce qu'**un déroulement automatique du déplacement est commandé en se basant sur un nombre déterminé de cycles.

17. Procédé selon la revendication 16, **caractérisé en ce que** pour la vérification d'une validité du signal de pilotage, un nombre minimum des cycles est évalué.

18. Procédé selon l'une des revendications précédentes, **caractérisé en ce que** le dispositif de commande (20, 20", 20'a, 20'b) active un fonctionnement de secours en particulier suite à une situation d'accident, et **en ce que** chaque signal de pilotage pour l'ouverture automatique de la vitre transmis via l'interface aérienne (50, 50") est interprété par le dispositif de commande (20, 20", 20'a, 20'b).

19. Procédé selon la revendication 18, **caractérisé en ce que** pendant un fonctionnement normal, le pilotage du dispositif de commande (20, 20", 20'a, 20'b) s'effectue en se basant sur des signaux de manipulation transmis par câble, et **en ce que** pendant un fonctionnement de secours, en particulier pour un lève-vitre, le pilotage du dispositif de commande (20, 20", 20'a, 20'b) s'effectue en se basant sur les signaux de pilotage via l'interface aérienne (50, 50").

20. Procédé selon l'une des revendications précédentes, **caractérisé en ce que** pour un déroulement automatique du déplacement, le signal de pilotage est codé par un code automatique.

21. Procédé selon l'une des revendications précédentes, **caractérisé en ce que** le signal de pilotage est transmis par une modulation d'absorption d'un premier champ magnétique alternatif du fait que le dispositif de commande (20, 20", 20'a, 20'b) émet le premier champ magnétique alternatif, la qualité d'un circuit de réception du dispositif de manipulation (10, 10', 10") pour la modulation d'absorption pour le déplacement est modifiée de manière caractéristique, et le dispositif de commande (20, 20", 20'a, 20'b) évalue pour la commande la modification de l'absorption du premier champ magnétique alternatif.

22. Procédé selon l'une des revendications 1 à 20, **caractérisé ce que** pour transmettre le signal de pilotage, un second champ alternatif radioélectrique électromagnétique indépendant d'un premier champ alternatif radioélectrique électromagnétique transmis au dispositif de manipulation (10, 10', 10"), est transmis du dispositif de manipulation (10, 10', 10") au dispositif de commande (20, 20", 20'a, 20'b).

23. Dispositif de déplacement actionné par une force externe pour déplacer un siège, un appui-tête ou une vitre d'un véhicule automobile, comportant un entraînement pour le déplacement, un dispositif de commande (20, 20", 20'a, 20'b) commandant l'entraînement, un dispositif de manipulation (10, 10', 10") sur lequel est agencé un premier dispositif de transmission (120, 120", 120a, 120b, 120'aa, 120'ab, 120'ba, 120'bb) par l'actionnement manuel duquel le dispositif de commande (20, 20", 20'a, 20'b) est piloté par le dispositif de manipulation (10, 10', 10"), et comportant un second dispositif de transmission (210, 210") agencé sur le dispositif de commande et destiné à la transmission par télécommande d'un signal de pilotage **caractérisé par** l'actionnement du dispositif de manipulation (10, 10', 10") et associé à la direction de déplacement, via une interface aérienne (50, 50"),
**caractérisé en ce que**
- à chaque direction de déplacement est associé un premier dispositif de transmission (120, 120", 120a, 120b, 120'aa, 120'ab, 120'ba, 120'bb) du dispositif de manipulation (10, 10', 10"),
- le dispositif de manipulation (10, 10', 10") est alimenté en énergie via l'interface aérienne (50, 50"),
- un émetteur central (70') ou le second dispositif de transmission (210, 210") agencé sur le dispositif de commande transmet les signaux corrélés à une manipulation du dispositif de manipulation (10, 10', 10") via l'interface aérienne (50, 50"),
- la caractéristique du signal de pilotage pour piloter le dispositif de commande (20, 20", 20'a, 20'b) est modifiée par le dispositif de manipulation (10, 10', 10") en correspondance de la direction de déplacement, et
- le dispositif de commande (20, 20", 20'a, 20'b) associe le signal de pilotage et commande l'entraînement dans la direction qui correspond au signal de pilotage transmis via l'interface aérienne (50, 50") et modifié par le dispositif de manipulation (10, 10' 10") en correspondance de la direction de déplacement.

24. Dispositif de déplacement actionné par une force externe selon la revendication 23, **caractérisé en ce que** pour la manipulation il est prévu une ou plusieurs touches (103, 103a, 103b, 103") du dispositif de manipulation (10, 10', 10"), dont l'état de commutation est susceptible d'être transmis à un premier dispositif de transmission (120, 120", 120a, 120b, 120'aa, 120'ab, 120'ba, 120'bb).

25. Dispositif de déplacement actionné par une force externe selon la revendication 24, **caractérisé en ce que** pour la manipulation il est prévu une ou plusieurs touches (103, 103a, 103b, 103") du dispositif de manipulation (10, 10', 10"), dont l'état de commutation est susceptible d'être transmis à un blindage (110, 110', 110", 111") sur le dispositif de transmission (120, 120", 120a, 120b, 120'aa, 120'ab, 120'ba, 120'bb).

26. Dispositif de déplacement actionné par une force externe selon la revendication 24 ou 25, **caractérisé en ce que** le premier dispositif de transmission (120, 120", 120a, 120b, 120'aa, 120'ab, 120'ba, 120'bb) du dispositif de manipulation (10, 10', 10") présente pour au moins une direction du déplacement un module émetteur/récepteur comportant un blindage (110, 110', 110", 111"), le blindage (110, 110', 110", 111") étant manuellement variable pour la manipulation.

27. Dispositif de déplacement actionné par une force externe selon la revendication 26, **caractérisé en ce que** le module émetteur/récepteur est susceptible d'être déplacé jusque dans le blindage (110, 110', 110", 111") ou hors du blindage (110, 110', 110", 111").

28. Dispositif de déplacement actionné par une force externe selon la revendication 26 ou 27, **caractérisé en ce que** le module émetteur/récepteur est un transpondeur (120, 120", 120a, 120b).

29. Dispositif de déplacement actionné par une force externe selon la revendication 26 ou 27, **caractérisé en ce que** le module émetteur/récepteur est un convertisseur inter-numérique (120'aa, 120'ab, 120'ba, 120'bb) pourvu d'une antenne d'émission/réception.
